Europäisches Patentamt

European Patent Office

Office européen des brevets

(19)

(11) **EP 1 465 193 A1**

(12) **EUROPEAN PATENT APPLICATION**

(43) Date of publication:
06.10.2004 Bulletin 2004/41

(51) Int Cl.⁷: **G11B 27/10**, G11B 27/30,
G11B 27/28

(21) Application number: 03290839.4

(22) Date of filing: 04.04.2003

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(71) Applicant: **Thomson Licensing S.A.
92648 Boulogne Cedex (FR)**

(72) Inventors:
 • **Stauder, Jürgen
  35440 Montreuil sur Ille (FR)**
 • **Cupeau, Bertrand
  35700 Rennes (FR)**

 • **Oisel, Lionel C.
  35137 Pleumeleuc (FR)**
 • **Chevallier, Louis D.
  35520 La Meziere (FR)**
 • **Chai, Sek
  2139 Valencia CA 91355 (US)**

(74) Representative: **Rossmanith, Manfred, Dr. et al
Deutsche Thomson-Brandt GmbH
European Patent Operations
Karl-Wiechert-Allee 74
30625 Hannover (DE)**

(54) **Method for synchronizing audio and video streams**

(57)    A method for synchronizing audio and video recordings is presented, which comprises scanning of the audio and the video recording for unambiguous audio-visual events, storing the time-codes associated to the audio-visual events and performing a plausibility check on the time-codes. The plausibility check evaluates the temporal distance between the occurrence of consecutive audio-visual events in both, the audio and the video recording, based on the assumption that the distance in both recordings is substantially equal. A signal indicating that manual interaction is required is issued upon the plausibility check failing. Synchronized playback is effected by playing back the audio and the video recordings starting from plausibility-checked connected time-code pairs.

**Fig. 3**

## Description

The invention relates to a method for synchronized reproduction of audio and video streams containing, *inter alia,* unambiguous audio-visual events, and which were recorded using individual recording means.

## Background of the invention

At cinematographic production sites video sequences and the corresponding audio tracks are often captured by different, non-connected and poorly or non-synchronized recording devices. The recording may be made on analog or digital equipment, and the equipment does not necessarily add time-codes to the recordings. Time-codes included are not necessarily synchronized. Usually a scene is taken several times before the director is satisfied with the result. The individual recordings of a scene are often called takes. It is also conceivable to record takes of a scene with multiple cameras from different aspects. During a day of production several hours of content comprising several scenes are recorded. Usually, the video and the audio recording of all takes are recorded consecutively on the same respective recorder. The recorded material as a whole is sometimes also referred to as footage. In order to identify the starting point of a take, an audio-visual token is shown prior to the actors to begin acting. These tokens are often referred to as clapperboards or slates, and slate or audio-visual event are used in hereinafter as synonyms. A typical slate comprises a slate body and a hinged arm, which is in an opened position at the beginning of the recording and slapped against the body of the slate in order to create an unambiguous synchronized audio and video event. The key video event is the moment when the slate arm makes contact to the slate body. The key audio event is the slapping sound, which is produced by the slate arm making contact to the slate body. In postproduction, when the director selects one of the several takes to be included in the film, the beginning of an individual scene is searched for by searching for the occurrence of slates. If, e.g., a slate electronically displaying a time-code is found on the video recording, the operator reads the time-code and searches for the associated audio track at or around the time-code. This requires audio and video recording equipment, which records time-codes alongside with the audio and the video signal. If the slate does not contain an electronically displayed time-code, the occurrence of the audio-visual event, i.e., the slate, of the corresponding audio or video recording has to be detected manually. In the video recording, the closing of the slate arm, and in the audio recording, the associated clap is searched for. Since the video and audio recording were made on individual recording equipment, it is necessary to start playback in a synchronized manner. In order to reproduce several takes of video footage and the corresponding audio recording, the operator has to queue up the audio and video recording to the beginning of a take. This process is typically done manually by watching the video signal on a monitor and listening to the audio recording until the audio-visual event appears. If a large number of takes was made for a certain scene or a large number of scenes was taken during a day, the process of searching the starting points in the audio and video recording may be very time consuming. Furthermore, the time-codes of every detected audio-visual event indicating the start of a take are extracted and are linked together in order to allow for synchronized playback of the recordings. It is therefore desirable to use an automatic process for synchronizing playback of audio and video tracks, which were recorded on individual equipment, thus considerably reducing the post-processing time.

## Summary of the invention

The invention disclosed hereinafter provides a method for automatically synchronizing the playback of audio and video recordings. The method comprises scanning the audio and the video recording for occurrence of a predetermined audio-visual event, extracting time-code information associated with the event, storing the time-code information for later retrieval of starting points and performing a plausibility check on the time-code information extracted.

The video recording is scanned for occurrence of the audio-visual event using image processing means. The image processing means, upon detection of an audio-visual token, determine the moment, when the slate arm makes contact to the slate body, which is considered to be the key moment of the audio-visual event. If available, video time-code information $VT_i$ and audio timecode information $AT_i$ corresponding to the i-th audio-visual event is taken from the video recording. The time-code information may be recorded alongside with the video, or it may be comprised on the slate, which is used as the audio-visual event. However, even if no time-code information is recorded at all, it is possible to assign a time-code to the event by calculating the time-code from the known reproduction speed of the equipment. If the audio time-code information $AT_i$ is displayed on the slate, it is possible to extract the time-code using object detection and character recognition techniques. Thereby, a possible location for the detection of the event in the associated audio recording may be determined.

A similar method as for the video may be applied for searching the audio-visual event the audio recording, using audio pattern detection means. The time-codes $AT_i$ for the i-th audio-visual event is extracted accordingly from the audio recording.

If both recordings have time-codes associated to them, it is possible to link the time-codes of audio-visual events detected in the audio and the video recording so as to form a connected pair. Playback will then be effected by playing back the audio and the video recording beginning at the respective time-codes of the connected pair.

If only one of the audio or video recording has a time-code associated to it, the time-code of a detected audio-visual event may be assigned to the corresponding event of the recording not having time-codes.

After video analysis, a number of time-codes for detected audio-visual events in the video recording is stored. Equally, the audio analysis outputs time-codes for detected audio-visual events in the audio recording, which are stored.

A plausibility check is performed on the time-codes of detected audio-visual events after the audio and video recordings are scanned for the audio-visual events. For the plausibility check it is assumed that the temporal distance between the occurrence of two consecutive audio-visual events on the audio and the video recording is substantially corresponding. The temporal distance may be calculated using the time-codes, which are extracted from the recording, or by using calculated time-codes based on the known recording and reproduction speed of the equipment. If corresponding audio and video recordings do not show an expected occurrence of the audio-visual event at corresponding time-codes, an error signal is issued indicating that manual interaction is required. It is also possible to re-scan parts of either the audio or the video recording at the respective points of time in order to verify if an audio event was not detected or if an audio event was erroneously detected.

**Brief description of the drawing**

The invention shall be described in the following with reference to the drawing. In the drawing

Fig. 1    shows a representation of an audio recording and a video recording with time-codes associated to both recordings,

Fig. 2    shows a representation of an audio recording and a video recording with a time-code associated to the video recording only, and

Fig. 3    shows a representation of an audio recording and a video recording, where one audio-visual event is missing in the video recording.

In the drawing, similar or equal parts are designated by identical reference numerals.

**Detailed description of the invention**

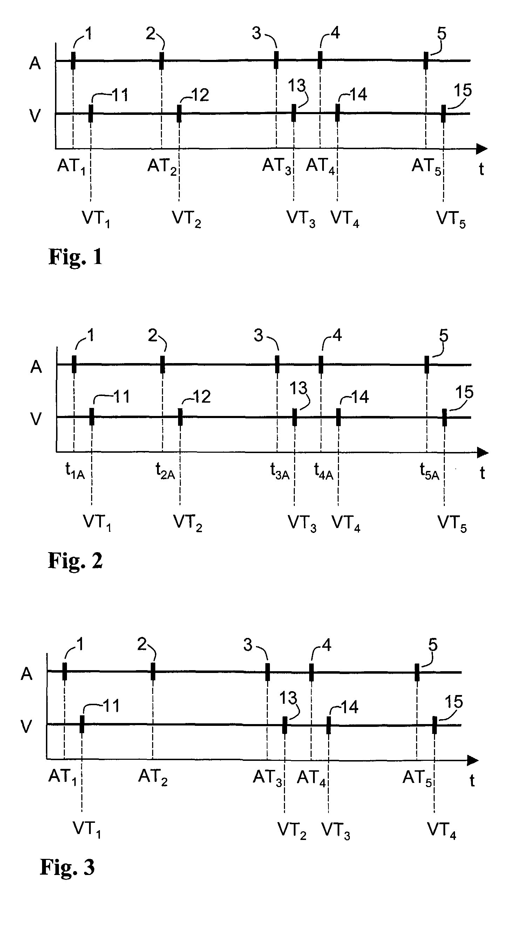

Figure 1 shows a simplified representation of an audio recording and a video recording both having time-codes recorded alongside the audio and the video signal. The audio signal, represented by the solid line A and the video recording, represented by the solid line V have a temporal offset against each other. The reason for the offset may be that the audio and the video recording equipment were not started simultaneously during the takes. Audio and Video recordings further have different time scales. The reason for different time scales is that time can be counted in different units such as seconds, number of frames, film meters. To simplify Figure 1, different time scales are not shown. In order to achieve a synchronized playback of the audio and the video recording, the audio-visual event must coincide in both recordings. Therefore, both recordings are scanned for occurrence of the audio-visual events. In figure 1 the occurrence of the audio-visual events is marked by the solid bars 1 to 5 and 11 to 15 in the audio recording and the video recording, respectively. Each detected audio-visual event has a time-code associated to it. In the drawing, the time-codes are referenced $AT_1$ to $AT_5$ for the audio recording and $VT_1$ to $VT_5$ for the video recording.

Prior to generating connected pairs of audio and video time-codes a time-code plausibility check is effected.

In case the video and audio time-codes are extracted from an electronic slate, the plausibility check comprises storage of time-codes $VT_i$ and $AT_i$, $0 \leq i < I$, and calculating the time-code differences according to the formulae

$$VD_i = VT_{i+1} - VT_i \tag{1}$$

for the video time-codes and

$$AD_i = AT_{i+1} - AT_i \qquad \text{for } 0 \leq i < I\text{-}1 \tag{2}$$

for the audio time-codes. Then time-code ratios $r_i$ are calculated using

$$r_i = \frac{AD_i}{VD_i} \qquad \text{for } 0 \leq i < I\text{-}1, \tag{3}$$

A first mean ratio $r'$ is determined according to

$$r' = \sum_{m=0}^{I-2} r_m \ , \tag{4}$$

and a second mean ratio $r$ is determined according to

$$r = \sum_{m=0}^{I-1} w_m r_m \quad r = \sum_{m=0}^{I-2} w_m r_m \ , \tag{5}$$

wherein $w_m$ is a weighting factor according to $w_m = f(r_m, r')$. In a simple case the weighting factor may follow the formula

$$w_m = \begin{cases} 1 & \left| r_m - r' \right| < th1 \\ 0 & else \end{cases}, \tag{6}$$

with *th1* being a predetermined threshold and r' being the time-code ratio from formula (4). An iteration between formula (4) and (5) is possible by setting $r'=r$ after each iteration.

Time-codes ($VT_i$, $AT_i$) are rejected as erroneous, when either

$$|r_{i\text{-}1}\text{-}r| > th2 \ and \ |r_i\text{-}r| > th2, \text{ or} \tag{7}$$

$$|r_{i\text{-}1}\text{-}r| < th2 \ and \ |r_i\text{-}r| > th2 \ and \ |r_{i+1}\text{-}r| < th2, \text{ or} \tag{8}$$

$$|r_{i\text{-}2}\text{-}r| < th2 \ and \ |r_{i\text{-}1}\text{ -}r| > th2 \ and \ |r_i\text{-}r| < th2, \tag{9}$$

with th2 being a predetermined threshold.

In case the time codes are extracted from the detection of arm closing and the clapping sound, the plausibility check comprises storage of time-codes $VT_j$, $0 \leq j < J$ and $AT_k$, $0 \leq k < K$, and calculating the time-code differences according to the formulae

$$VD_j = VT_{j+1}\text{-}VT_j \qquad \text{for } 0 \leq j < J\text{-}1, \tag{10}$$

for the video time-codes assuming J visual events and

$$AD_k = AT_{k+1}\text{-}AT_k \qquad \text{for } 0 \leq k < K\text{-}1, \tag{11}$$

for the audio time-codes assuming K audio events. Then, an absolute ratio r of time-code differences is calculated according to

$$r = \frac{AT_{K-1} - AT_0}{VT_{J-1} - VT_0}. \tag{12}$$

Corresponding pairs of differences in the time-code of audio and video recordings, $VD_j$ and $AD_k$, for time-codes $(VT_j, VT_{j+1}, AT_k, AT_{k+1})$ are compared to a user-adjustable threshold th3.

$$|AD_k - rVD_j| < th3. \tag{13}$$

Pairs that fulfill this requirement are regarded as verified valid pairs and the associated pairs of timecodes $(AT_k, VT_j)$ and $(AT_{k+1}, VT_{j+1})$ are also regarded as verified.

If a pair of time-codes $(AT_k, VT_j)$ does not fulfill the requirement above, but one of the neighboring pairs $(AT_{k-1}, VT_{j-1})$ or $(AT_{k+1}, VT_{j+1})$ does, a further verification step is performed. Therefore, a set of indices $j'$, $j''$, $k'$ and $k''$ with $0 \le j' \le j \le j''$ and $0 \le k' \le k \le k''$ is determined, such that

$$\left| \sum_{m=k'}^{k''} AD_m - r \sum_{m=j'}^{j''} VD_m \right| < th4 , \tag{14}$$

with minimal threshold th4 and minimal differences $j''-j'$ and $k''-k'$. Time-codes $(VT_{j'}, VT_{j''+1}, AT_{k'}, AT_{k''+1})$ are regarded as verified if th4 is smaller than a predetermined limit. If th4 is larger than the predetermined limit, the time-codes $(VT_{j'}, VT_{j''+1}, AT_{k'}, AT_{k''+1})$ are considered erroneous and an error signal is issued, indicating that manual interaction is required. Also, time-codes $VT_j$ and $AT_k$ with $j' < j \le j''$ and $k' < k \le k''$ are considered erroneous and an error signal for these time-codes is issued, indicating interactive confirmation is required. The above processing step is repeated until no more time-codes can be verified using an acceptable threshold th4.

Using user-adjustable thresholds *th1*, *th2*, *th3* and *th4* advantageously allows for compensating for possible differences in the distance between two consecutive occurrences of the audio-visual event in the audio and the video recording.

Figure 2 shows a simplified representation of an audio recording and a video recording similar to the one shown in Figure 1. In contrast to the representation of Figure 1, the audio recording does not have time-codes associated to it. It is, however, possible to assign time markers $t_{1A}$ to $t_{5A}$ from the known reproduction speed of the equipment. Detecting the occurrence of an audio-visual event in both recordings is performed in a similar manner as was described with reference to Figure 1 by setting $AT_1 = t_{1A}$, $AT_2 = t_{2A}$ etc. The plausibility check is performed in a similar manner as for the case of Figure 1. Additionally, it is possible to assign time-codes from the video recording to the corresponding occurrence of an audio-visual event in the audio recording.

Figure 3 shows a representation of the audio recording and the video recording from Figure 1, where one time-code is missing in the video recording, i.e., one audio-visual event was not detected during scanning the recording. The plausibility check will determine the distance between the consecutive time-codes $AT_1$ and $AT_2$ and the distance between the consecutive time-codes $VT_1$ and $VT_2$. Upon calculating the time-code difference ratio and comparing the ratio to the preset threshold a signal will be issued, indicating that the detected consecutive audio-visual events are not matching.

Manual interaction comprises, inter alia, manually identifying time-codes at audio-visual events, e.g., a slate with an electronically displayed time-code. The identified time-codes may be added, if the audio-visual event is detected for the first time, or the time-codes may be corrected, if the automatic time-code extraction failed to deliver reliable results. Also, when replaying the audio or video signal at the assumed audio-visual event, erroneously detected audio-visual events may be identified, and the corresponding time-codes may be deleted. Manual interaction may also comprise re-running an identification process with adapted parameters for detection. This may also be done in a new batch process, without the assistance of an operator.

It is, however, also possible to use the inventive method for semi-automatic synchronization. The audio and video recordings are then subjected to the detection and verification processes, and the individual detected audio-visual events are presented to an operator for immediate control of the result. If the operator approves a detected event or the associated time-code, the current take will be synchronized. Upon rejecting the event or the associated time-code, the operator may manually enter a time-code or trigger a repeated detection process.

After detecting all connected pairs of audio-visual events and the associated time-codes, synchronized playback is possible by playing back both recordings beginning from the same connected pair of verified valid time-codes.

It is also possible to perform synchronization in a batch process without the assistance of an operator, and store suspicious time-codes that were not identified as valid for later manual checking.

In another embodiment of the inventive method, it is possible to store synchronization data derived according to the method in a storage apparatus or file in order not to change audio or video data of the original recording.

## Claims

1. Method for automatically synchronizing the starring points of audio and video signals, which are recorded simultaneously, but not synchronized, on dedicated individual recording means for each, audio and video, wherein the starting point is indicated by an audio-visual event, comprising the steps of:

   a) scanning the audio and the video recording for occurrence of the audio-visual event,
   b) extracting time-code information associated with the audio-visual event from at least one of the recordings,
   c) storing the time-code information for later retrieval of starting points, and
   d) performing a plausibility check on the time-code information extracted.

2. The method according to claim 1, **characterized in that**, if a first of the corresponding audio or video recordings does not have time-codes associated with it, the time-code information found on the second of the corresponding audio or video recordings is assigned to the first recording.

3. The method according to claim 1, **characterized in that** the plausibility checking comprises comparing the temporal distance between two consecutive events on the audio and the video recording, respectively.

4. The method according to claim 3, **characterized in that** upon violation of plausibility a consistency check is performed on the extracted time-code information.

5. The method according to claim 4, **characterized in that** the consistency check involves analyzing the recordings for missing and/or wrong and/or superfluous time-code information.

6. The method according to any of the preceding claims 3 to 5, **characterized in that** a signal is issued upon violation of plausibility and/or upon an unsuccessful run of the consistency check, indicating manual interaction is required.

7. The method according to claim 1, **characterized in that** the stored time-code information is used to control synchronized playback of audio and video reproduction means.

A

1    2    3    4    5

V

11   12   13   14   15

$AT_1$    $AT_2$    $AT_3$  $AT_4$    $AT_5$    t

$VT_1$    $VT_2$    $VT_3$  $VT_4$    $VT_5$

**Fig. 1**

A

1    2    3    4    5

V

11   12   13   14   15

$t_{1A}$    $t_{2A}$    $t_{3A}$  $t_{4A}$    $t_{5A}$    t

$VT_1$    $VT_2$    $VT_3$  $VT_4$    $VT_5$

**Fig. 2**

A

1    2    3    4    5

V

11   13   14   15

$AT_1$    $AT_2$    $AT_3$  $AT_4$    $AT_5$    t

$VT_1$    $VT_2$  $VT_3$    $VT_4$

**Fig. 3**

**European Patent Office**

## EUROPEAN SEARCH REPORT

Application Number

EP 03 29 0839

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 2 243 969 A (BRITISH BROADCASTING CORP) 13 November 1991 (1991-11-13) * the whole document * | 1,2,7 | G11B27/10 G11B27/30 G11B27/28 |
| Y | | 3-6 | |
| Y | EP 0 604 035 A (TEKTRONIX INC) 29 June 1994 (1994-06-29) * the whole document * | 3-6 | |
| A | US 4 450 531 A (SEBASTIAN RICHARD ET AL) 22 May 1984 (1984-05-22) * abstract * | 1 | |
| A | US 6 246 439 B1 (BAKER DANIEL G ET AL) 12 June 2001 (2001-06-12) * claim 1 * | 1 | |

| TECHNICAL FIELDS SEARCHED (Int.Cl.7) |
|---|
| G10L G11B H04N |

The present search report has been drawn up for all claims

| Place of search | Date of completion of the search | Examiner |
|---|---|---|
| THE HAGUE | 3 October 2003 | Mourik, J |

EPO FORM 1503 03.82 (P04C01)

## ANNEX TO THE EUROPEAN SEARCH REPORT
## ON EUROPEAN PATENT APPLICATION NO.

EP 03 29 0839

This annex lists the patent family members relating to the patent documents cited in the above-mentioned European search report.
The members are as contained in the European Patent Office EDP file on
The European Patent Office is in no way liable for these particulars which are merely given for the purpose of information.

03-10-2003

| Patent document cited in search report | | Publication date | Patent family member(s) | | Publication date |
|---|---|---|---|---|---|
| GB 2243969 | A | 13-11-1991 | NONE | | |
| EP 0604035 | A | 29-06-1994 | US | 5387943 A | 07-02-1995 |
| | | | DE | 69307673 D1 | 06-03-1997 |
| | | | DE | 69307673 T2 | 03-07-1997 |
| | | | EP | 0604035 A2 | 29-06-1994 |
| | | | JP | 2969319 B2 | 02-11-1999 |
| | | | JP | 6284357 A | 07-10-1994 |
| US 4450531 | A | 22-05-1984 | CA | 1191264 A1 | 30-07-1985 |
| US 6246439 | B1 | 12-06-2001 | US | 6211919 B1 | 03-04-2001 |
| | | | DE | 69810977 D1 | 06-03-2003 |
| | | | DE | 69810977 T2 | 04-09-2003 |
| | | | EP | 0868082 A2 | 30-09-1998 |
| | | | JP | 10304322 A | 13-11-1998 |

EPO FORM P0459

For more details about this annex : see Official Journal of the European Patent Office, No. 12/82